# EUROPEAN PATENT APPLICATION

(11) **EP 4 293 485 A1**
(43) Date of publication of application: **20.12.2023**
(21) Application number: 23178217.8
(22) Date of filing: 08.06.2023
(51) Int. Cl.: G06F 3/0354, G06F 3/04895, G10H 1/00

(54) **ELECTRONIC DEVICE, ELECTRONIC MUSICAL INSTRUMENT, CONTROL METHOD, AND STORAGE MEDIUM**

(30) Priority: 17.06.2022 JP 2022097684
(71) Applicant: Casio Computer Co., Ltd., Tokyo 151-8543 (JP)
(72) Inventor: KAJIKAWA, Tomoya, Tokyo 205-8555 (JP); OKANO, Shingo, Tokyo 205-8555 (JP); MORIYAMA, Osamu, Tokyo 205-8555 (JP); TERAO, Ken, Tokyo 205-8555 (JP); MORITANI, Shinichi, Tokyo 205-8555 (JP); ICHIMURA, Yutaro, Tokyo 205-8555 (JP)
(74) Representative: Plougmann Vingtoft a/s

(57) **Abstract**

Disclosed is an electronic device (100) including: a display (16); a detector (151) that detects contact or proximity between an operating body and a detection surface; multiple light emitters (151) that are provided at a position corresponding to the detector, and cause the detection surface to emit light; and at least one processor (11). The processor performs control to link displaying regarding at least part of a content on the display with light emission of at least part of the light emitters.

## Description

### REFERENCE TO RELATED APPLICATIONS

This application is based upon and claims the benefit of priority from the prior Japanese Patent Application No. 2022-097684, filed on June 17, 2022, the entire contents of which are incorporated herein by reference.

### TECHNICAL FIELD

The present disclosure relates to an electronic device, an electronic musical instrument, a control method, and a storage medium.

### DESCRIPTION OF RELATED ART

Conventionally, some input interfaces such as physical buttons, dials, and capacitive touch panels have been used to perform operations such as moving the cursor displayed on the screen. For example, JP 2020-204868A describes a display device capable of emitting light from a light source at a position corresponding to the finger being slid on the slide operation part and also scrolling the item image in the scroll image part.

### SUMMARY OF THE INVENTION

In the display device of JP 2020-204868A, when it is identified that a finger is touching a predetermined position on the slide operation part, the position corresponding to the predetermined position is caused to emit light and the other first light sources are caused to extinguish light, and the display on the image display unit is scrolled by sliding the finger on the slide operation part, and the like. However, there was no description of properly informing the user how to operate the slide operation part to scroll the display of the image display unit before his/her finger touches the slide operation part, which lacked convenience.

The present disclosure has been made in consideration of the above matter, and an object of the present disclosure is to improve the convenience of user operation to the screen display.

According to an aspect of the present disclosure, there is provided an electronic device including: a display; a detector that detects contact or proximity between an operating body and a detection surface; multiple light emitters that are provided at a position corresponding to the detector, and cause the detection surface to emit light; and at least one processor, wherein the processor performs control to link displaying regarding at least part of a content on the display with light emission of at least part of the light emitters.

According to the present disclosure, it is possible to improve the convenience of user operation to the screen display.

### BRIEF DESCRIPTION OF DRAWINGS

The accompanying drawings are not intended as a definition of the limits of the disclosure but illustrate embodiments of the disclosure, and together with the general description given above and the detailed description of the embodiments given below, serve to explain the principles of the disclosure, wherein:
FIG. 1 is a block diagram showing the functional configuration of an electronic musical instrument of the present disclosure;
FIG. 2 is a view showing the external configuration example of the electronic musical instrument of the present disclosure;
FIG. 3 is a view showing a display on which an input ring and a confirmation screen are displayed;
FIG. 4 is a flowchart showing the flow of a light emission control process executed by a CPU in FIG. 1;
FIG. 5 is a view schematically showing display of the display and an input ring by steps S2 to S3 in FIG. 4;
FIG. 6 is a view schematically showing display of the display and the input ring by steps S4 to S5 in FIG. 4;
FIG. 7 is a view showing an example prompting the user to perform a slide operation of the input ring by synchronizing displaying of a character switching screen with light emission of the input ring; and
FIG. 8 is a view showing another example prompting the user to perform a slide operation of the input ring by synchronizing displaying of a character switching screen with light emission of the input ring.

### DETAILED DESCRIPTION

An embodiment of an electronic device according to the present disclosure will be described with reference to the drawings. Though the embodiment is described below for a case where the electronic device is an electronic musical instrument, the present disclosure is not limited thereto. The present disclosure may be applied to any electronic device as long as it includes a display and an input interface to be described below. In addition, the scope of the present disclosure is not limited to the illustrated examples.

### [Configuration of Electronic Musical Instrument 100]

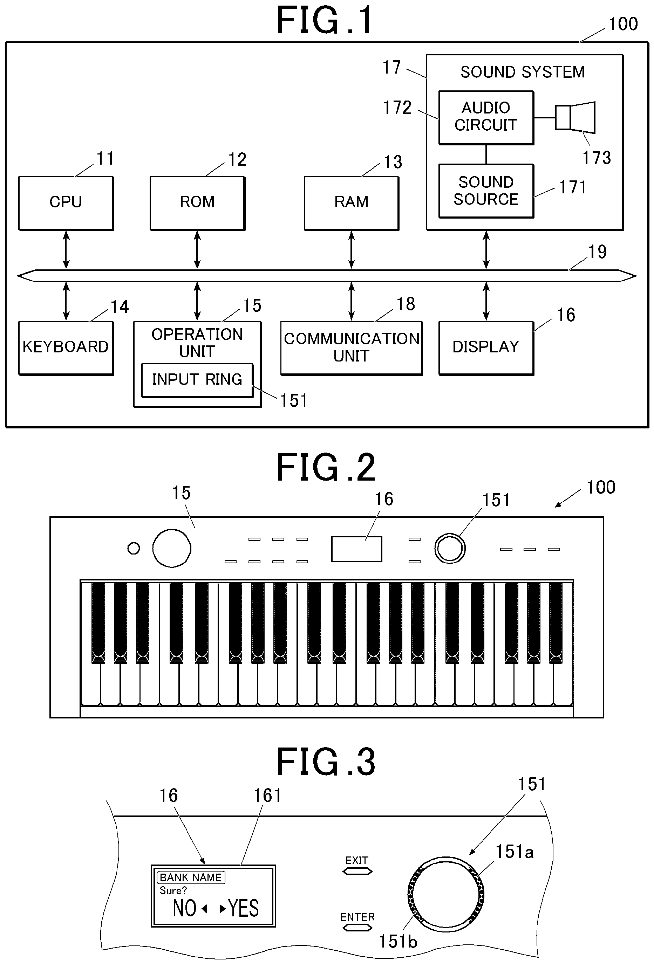

FIG. 1 is a block diagram showing the functional configuration of an electronic musical instrument 100 according to the present disclosure. FIG. 2 is a view showing the external configuration example of the electronic musical instrument 100.

As shown in FIGS. 1 and 2, the electronic musical instrument 100 is configured by including at least one processor such as a CPU (Central Processing Unit) 11, a ROM (Read Only Memory) 12, a RAM (Random Access Memory) 13, a keyboard 14, an operation unit 15, a display 16, a sound system 17, and a communication unit 18, which are connected by a bus 19.

The CPU 11 reads out programs and data stored in the ROM 12 and executes various processes using the RAM 13 as a work area, thereby centrally controlling each part of the electronic musical instrument 100. For example, the CPU 11 causes the sound system 17 to output the musical instrumental sound of piano and the like according to the pitch of the key pressed on the keyboard 14, and causes the sound system 17 to output the music selected by the operation unit 15. The CPU 11 also causes the sound system 17 to play the music based on the audio data input from the external device via t the communication unit 18. The CPU 11 also functions as a controller of the present disclosure by executing a light emission control process to be described later.

The ROM 12 stores programs, various types of data, and the like.

The RAM 13 provides memory space for work to the CPU 11 and temporarily stores data.

The keyboard 14 is configured by including multiple keys (operating elements), and outputs information on pressed/released keys to the CPU 11.

The operation unit 15 has various switches and operation keys, and outputs operation signals corresponding to operations of the various switches and operation keys by the user to the CPU 11.

As shown in FIG. 2, the operation unit 15 includes an input ring 151 that is a circular input interface. The input ring 151 is configured by including: a detector (sensor) that detects a contact position between an operating body and a detection surface that is one continuous circular area, by change in capacitance; and multiple light emitters (LEDs: Light Emitting Diodes) that are circularly provided at the position corresponding to the detector and cause the detection surface to emit light. The input ring 151 detects the contact position on the detection surface of the input ring 151 by the operating body and outputs the detection result to the CPU 11, and causes the light emitters to emit light according to control by the CPU 11. The detection by the detector does not necessarily require the operating body to be in "contact" with the detection surface. The detector may detect the change in capacitance when the operating body is in "proximity" (noncontact state) to the detection surface. In other words, the detector may detect contact or proximity to the detection surface by the operating body when the capacitance has changed by a threshold value or more.

The detector may not be a sensor that detects the change in capacitance but may be an optical sensor or a thermal sensor, as long as it can detect the contact or proximity of the operating body.

Though the embodiment takes, as an example, a case where the operating body is a finger, the operating body is not limited to this. The operating body may be other objects such as a stylus pen, for example. In addition, though the embodiment takes, as an example, a case where the input ring 151 is circular, the input ring 151 is not limited to the circular shape. The input ring 151 may be oval, square, and rectangular, for example.

The display 16 is configured by including an LCD (Liquid Crystal Display) and the like, and performs displaying in accordance with instructions of display signals input from the CPU 11.

The sound system 17 is configured by including a sound source 171, an audio circuit 172, and a speaker 173.

The sound source 171 reads out waveform data that is stored in the ROM 12 in advance or generates waveform data and outputs the data to the audio circuit 172, in accordance with the control instruction from the CPU 11.

The audio circuit 172 performs D/A conversion and amplify the waveform data output from the sound source 171 or waveform data (audio data) input from the communication unit 18, and the speaker 173 outputs the amplified analog sound.

The communication unit 18 transmits and receives data to and from external devices such as external terminals connected via communication networks such as the Internet, and communication interfaces such as Bluetooth (registered trademark), USB (Universal Serial Bus) cables, and external storage media such as USB memory.

### [Operation of Electronic Musical Instrument 100]

Next, the operation of the electronic musical instrument 100 will be described.

When options are displayed on the display 16, the CPU 11 divides the circumference of the input ring 151 into multiple areas according to the number of options, and when an area of the input ring 151 corresponding to any of the options has been tapped, the CPU 11 determines that the option corresponding to the tapped area is selected.

For example, when the confirmation screen 161 shown in FIG. 3 is displayed on the display 16, the CPU 11 divides the circumference (on the detection surface) of the input ring 151 into four areas top, bottom, left, and right (for example, into four areas top, bottom, left, and right with equal arc lengths), and sets the area on the right side (right area) 151a as the area for selecting "YES" (selection area for "YES") and sets the area on the left side (left area) 151b as the area for selecting "NO" (selection area for "NO").

The CPU 11 determines that YES is selected when the right area 151a has been tapped, and determines that NO is selected when the left area 151b has been tapped.

However, without a means to inform the user that tapping the right area 151a in the input ring 151 allows the user to select YES and tapping the left area 151b allows the user to select NO, the user does not know what operation to use to make the selection, which is not convenient.

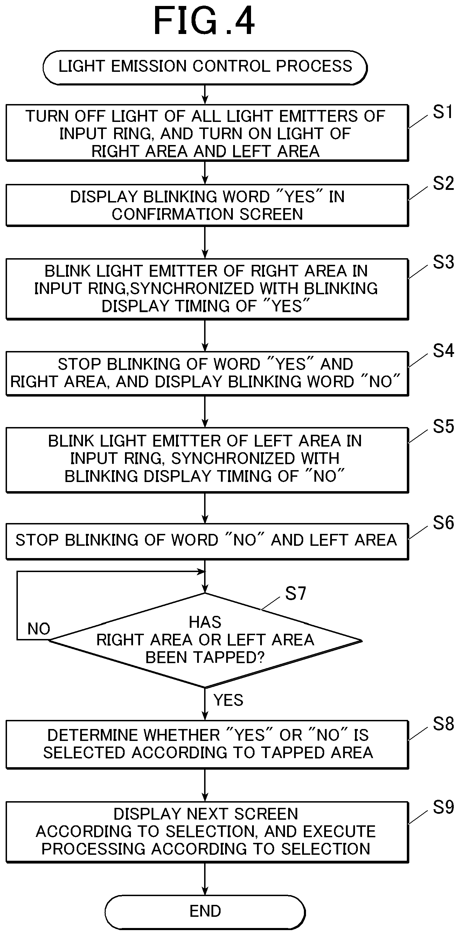

Therefore, when the confirmation screen 161 is displayed on the display 16, the CPU 11 executes the light emission control process shown in FIG. 4 so that the user can recognize how to select the options. The light emission control process is executed by cooperation between the CPU 11 and the program stored in the ROM 12.

In the light emission control process, the CPU 11 first causes all the light emitters of the input ring 151 to turn off (extinguish) light, and then causes the right area 151a and the left area 151b to turn on (emit) light (step S1).

FIG. 3 is a view schematically showing the display of the display 16 and the input ring 151 in step S1. In the display of input ring 151 in FIGS. 3 and 5 to 8, darker density indicates higher light emission intensity (unit: nit, and the like). White indicates no light emission.

Next, the CPU 11 displays the blinking word "YES" in the confirmation screen 161 of the display 16 (step S2). The "blink" in this embodiment refers to the repetition of light emission and turning off light several times (for example, 2 to 3 times) per second.

The CPU 11 causes the light emitter of the right area 151a in the input ring 151 to blink, synchronized with the blinking display timing of the word "YES" (step S3). The "synchronization" in the embodiment indicates that at least part of the contents (characters, symbols, and the like) on the display 16 and at least part of the light emitters of the input ring 151 are linked with each other and turn on (emit) light, turn off (extinguish) light, or blink. The "synchronization" between the displaying of the display 16 and the light emission of the input ring 151 does not have to be exactly the same timing. The timings may be off by a few ms.

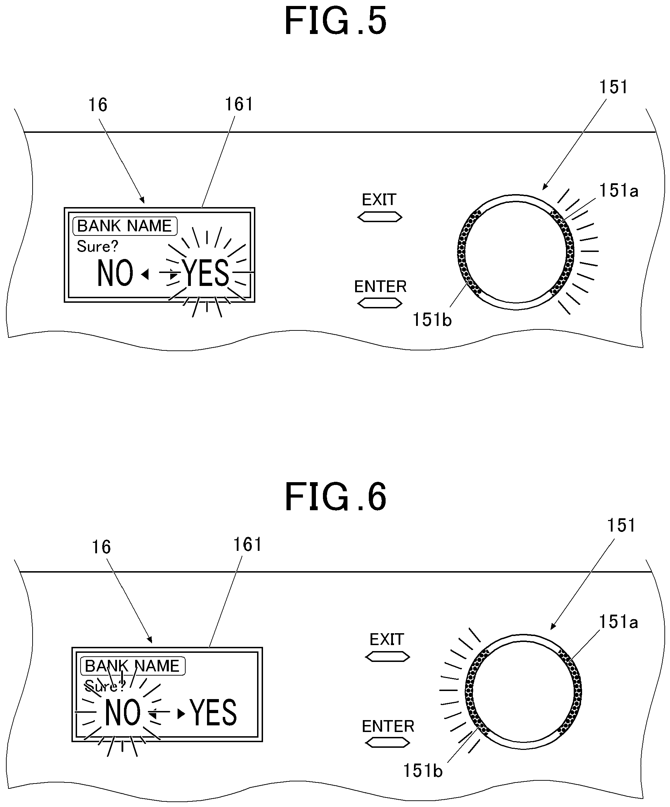

FIG. 5 is a view schematically showing the display of the display 16 and the input ring 151 by steps S2 to S3. In FIG. 5, the solid lines spread around the word "YES" displayed on the display 16 and to the right of the input ring 151 represent the synchronized blinking of the word "YES" and the light emitter of the right area (right area 151a) in the input ring 151 (the same applies to "NO" in FIG. 6) . As shown in FIG. 5, by synchronizing the blinking of the word "YES" in the confirmation screen 161 with the blinking of the light emitter of the right area 151a in the input ring 151, it is possible to allow the user to recognize that the "YES" option in the confirmation screen 161 corresponds to the right area 151a in the input ring 151 and that the user can select "YES" by tapping the right area 151a.

The CPU 11 next stops the blinking of the word "YES" in the confirmation screen 161 of the display 16 and the light emitter of the right area 151a in the input ring 151, and displays the blinking word "NO" in the confirmation screen 161 of the display 16 (step S4).

The CPU 11 causes the light emitter of the left area 151b in the input ring 151 to blink, synchronized with the blinking display timing of the word "NO" (step S5).

FIG. 6 is a view schematically showing the display of the display 16 and the input ring 151 by steps S4 to S5. As shown in FIG. 6, by synchronizing the blinking of the word "NO" in the confirmation screen 161 with the blinking of the light emitter of the left area 151b in the input ring 151, it is possible to allow the user to recognize that the "NO" option in the confirmation screen 161 corresponds to the left area 151b in the input ring 151 and that the user can select "NO" by tapping the left area 151b.

The CPU 11 next stops the blinking of the word "NO" in the confirmation screen 161 of the display 16 and the light emitter of the left area 151b in the input ring 151 (step S6).

As a result, the input ring 151 has the right area 151a and the left area 151b turned on (emitting light).

Next, the CPU 11 waits for the right area 151a or the left area 151b in the input ring 151 to be tapped (step S7).

When the CPU 11 determines that the right area 151a or the left area 151b in the input ring 151 has been tapped (step S7; YES), the CPU 11 determines whether YES or NO is selected according to the tapped area on the display 16 (step S8), transitions the display 16 to the next screen according to the selection, executes the processing according to the selection (step S9), and ends the light emission control process.

When the tap operation is performed on an area other than the right area 151a or the left area 151b in the input ring 151, the CPU 11 does not change the contents displayed on the display 16, invalidating the operation.

Thus, in the above light emission control process, in the state in which the confirmation screen 161 is displayed, the CPU 11 first causes the light emitter of the right area 151a in the input ring 151 corresponding to the "YES" option and the light emitter of the left area 151b corresponding to the "NO" option in the confirmation screen 161 to turn on (emit) light. Next, the CPU 11 displays the blinking word "YES" in the confirmation screen 161 and causes the light emitter of the right area 151a in the input ring 151 to blink, synchronized with the blinking display timing of the word "YES". Next, the CPU 11 displays the blinking word "NO" in the confirmation screen 161 and causes the light emitter of the left area 151b in the input ring 151 to blink, synchronized with the blinking display timing of the word "NO".

The user can be informed how to select each of the "YES" and "NO" options in the confirmation screen 161, thereby improving the convenience of user operation to the screen display.

As described above, the electronic musical instrument 100 includes: a display 16; and an input ring 151 that includes a detector that detects contact between an operating body and a circular detection surface and multiple light emitters that are circularly provided at the position corresponding to the detector and cause the detection surface to emit light. The CPU 11 performs control to synchronize (link) the display regarding at least part of the contents on the display 16 with light emission of at least part of the multiple light emitters of the input ring 151.

Accordingly, the user can be informed, for example, by the light emission of the operating part of the input ring 151 corresponding to the display on the display 16, synchronized with the display on the display 16, thereby improving the convenience of user operation to the screen display.

For example, when at least two options are displayed on the display 16, the CPU 11 sets a selection area corresponding to each of the options displayed on the display 16 on the detection surface of the input ring 151, and causes the light emitter corresponding to each selection area among the multiple light emitters to emit light.

Accordingly, the user can easily recognize which area of the input ring 151 is to be operated to select the option on the screen.

For example, the CPU 11 causes each of the options displayed on the display 16 and the light emitter corresponding to the selection area in the input ring 151 corresponding to the option to turn on (emit) light or blink, synchronized with each other. Thereby, the user can more easily and intuitively recognize which area of the input ring 151 is to be operated to select the option on the screen.

For example, the CPU 11 performs control not to change the contents displayed on the display 16 when the operating body is brought into contact with or proximity to the area in the detection surface of the input ring 151, the area corresponding to the light emitter that is not emitting light. Thus, the operation to parts that are not synchronized with the display can be invalidated.

The described contents in the embodiment and modification example are preferred examples of the electronic device, electronic musical instrument, control method and storage medium according to the present disclosure, and the present disclosure is not limited to them.

For example, the embodiment takes, as an example, the case where the options displayed on the display 16 are two options "YES" and "NO". However, the number of options is not limited to two. For example, when four options are displayed on the display 16, the CPU 11 may divide the detection surface (circumference) of the input ring 151 so that four areas (for example, four areas with equal arc lengths) can be created top, bottom, left, and right, to set a selection area corresponding to each of the four options, and cause each of the four options and the selection area corresponding to the option to sequentially turn on (emit) light or blink, synchronized with each other. Thereby, the user can easily recognize which area of the input ring 151 is to be operated to select each of the four options.

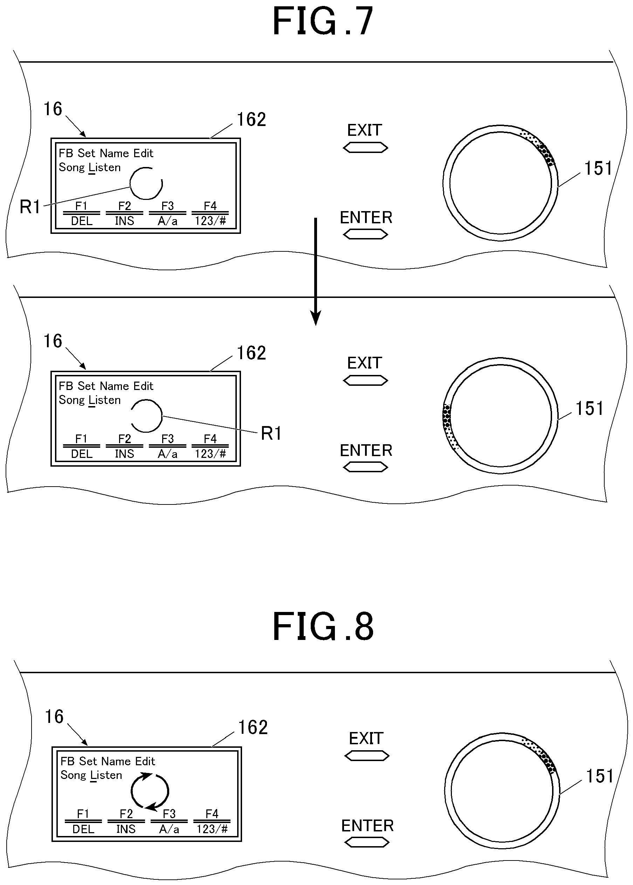

For example, in the character switching screen 162 shown in FIG. 7, it is possible to switch, for example, the underlined character ("L" in FIG. 7) in alphabetical order, by sliding the input ring 151, but some users are not aware of this function. Therefore, when the sliding operation of the detection surface of the input ring 151 by the operating body is accepted (for example, when the character switching screen 162 is displayed), the CPU 11 may cause the display 16 to perform displaying of representing the rotation of the circular diagram on the screen displayed on the display 16, and may also cause part of the multiple light emitters of the input ring 151 to emit light sequentially, synchronized with the rotation of the circular diagram displayed on the display 16.

For example, as shown in FIG. 7, the CPU 11 causes a diagram (called a ring diagram) R1 representing the input ring 151 to be displayed on the screen displayed on the display 16, and emit light or turn off light while sequentially moving around the circumference of the ring diagram R1 to perform displaying of representing the rotation of the ring diagram R1, and causes the light emitter among the multiple light emitters of the input ring 151 to emit light synchronized with the light emission or light turning off around the circumference of the ring diagram R1, the light emitter being at the position corresponding to the position where the ring diagram R1 is emitting light or turning off light. The CPU 11 causes the other light emitters to turn off light. This allows the user to intuitively recognize that the user should slide the input ring 151.

In order to make it easier for the user to notice the sliding operation around the circumference of the input ring 151, the CPU 11 may cause the display 16 to display, instead of the ring diagram R1, a diagram showing arc-shaped arrows rotating as shown in FIG. 8.

FIGS. 5 and 6 in the embodiment takes, as an example, a case where one word is kept turned on light and the other word is made blinking on the display 16. However, the display method is not limited to this. For example, the display 16 may be controlled to keep one word turned off light and blink the other word. Synchronized with this, the light emitters may also be controlled such that one area in the input ring 151 turns off light and the other area blinks. The blinking of the display 16 and the input ring 151 includes not only a case of repeating between turning on light at the maximum light emission intensity and completely turning off light (zero light emission intensity), but also a case of repeating between turning on light at the maximum light emission intensity and turning on light at a light emission intensity weaker than the maximum light emission intensity.

Although the above embodiment discloses an example in which a semiconductor memory such as a ROM is used as the computer-readable medium for the program related to the present disclosure, the medium is not limited to this example. As other computer-readable media, HDDs, SSDs, and portable storage media such as CD-ROMs can be applied. The carrier wave is also applicable as a medium for providing program data related to the present disclosure via communication lines.

As for the other detailed configurations and detailed operations of the electronic device and the electronic musical instrument, modifications can be appropriately made within the scope of the present disclosure.

Though several embodiments of the present disclosure have been described above, the technical scope of the present disclosure is not limited to the above embodiment, but determined on the basis of the description in CLAIMS. Furthermore, the technical scope of the present disclosure also includes the equivalent scope to which modifications, from the description of CLAIMS, not related to the essence of the present disclosure is added.

## Claims

1. An electronic device (100) comprising:
a display (16);
a detector (151) that detects contact or proximity between an operating body and a detection surface;
multiple light emitters (151) that are provided at a position corresponding to the detector, and cause the detection surface to emit light; and
at least one processor (11), wherein
the processor performs control to link displaying regarding at least part of a content on the display with light emission of at least part of the light emitters.

2. The electronic device according to claim 1, wherein at least two options are displayed on the display, and the processor sets, on the detection surface, a selection area (151a, 151b) corresponding to an option that is each of the options, and causes a light emitter corresponding to the selection area among the light emitters to emit light.

3. The electronic device according to claim 2, wherein four options are displayed on the display, and the processor sets the selection area corresponding to the option on the detection surface so as to create four areas top, bottom, left, and right, and causes the light emitter, among the light emitters, corresponding to the selection area to emit light.

4. The electronic device according to claim 2 or 3, wherein the processor causes the option displayed on the display and the light emitter corresponding to the selection area corresponding to the option among the light emitters, to emit light, extinguish light, or blink, such that the option is linked with the light emitter.

5. The electronic device according to any one of claims 1 to 4, wherein the processor does not change the content displayed on the display in response to the contact or the proximity of the operating body to an area in the detection surface, the area corresponding to a light emitter that is not caused to emit light among the light emitters.

6. The electronic device according to any one of claims 1 to 5, wherein the detector detects the contact or the proximity between the operating body and the detection surface in response to a change in capacitance being a threshold value or more.

7. The electronic device according to any one of claims 1 to 6, wherein the detection surface is circular, and the light emitters are circularly provided.

8. The electronic device according to claim 7, wherein a slide operation of the detection surface by the operating body is accepted, and the processor causes the display to perform displaying of representing a rotation of a circular diagram (R1), and causes part of the light emitters that are circularly provided to sequentially emit light so as to be linked with the rotation of the circular diagram displayed on the display.

9. An electronic musical instrument (100) comprising:
a display (16);
a detector (151) that detects contact or proximity between an operating body and a detection surface;
multiple light emitters (151) that are provided at a position corresponding to the detector, and cause the detection surface to emit light; and
at least one processor (11), wherein
the processor performs control to link displaying regarding at least part of a content on the display with light emission of at least part of the light emitters.

10. A control method for a computer to control an electronic device (100) including: a display (16); a detector (151) that detects contact or proximity between an operating body and a detection surface; and multiple light emitters (151) that are provided at a position corresponding to the detector, and cause the detection surface to emit light, the control method comprising performing control, by the computer, to link displaying regarding at least part of a content on the display with light emission of at least part of the light emitters.

11. A non-transitory computer-readable storage medium storing a program for a computer to control an electronic device (100) including: a display (16); a detector (151) that detects contact or proximity between an operating body and a detection surface; and multiple light emitters (151) that are provided at a position corresponding to the detector, and cause the detection surface to emit light, and the program causing the computer to
perform control to link displaying regarding at least part of a content on the display with light emission of at least part of the light emitters.
